# EUROPEAN PATENT APPLICATION

(11) **EP 1 450 469 A2**
(43) Date of publication of application: **25.08.2004**
(21) Application number: 04250869.7
(22) Date of filing: 18.02.2004
(51) Int. Cl.: H02K 17/30, H02K 3/28, H02K 17/08, H02K 17/14

(54) **Electric motor**

(30) Priority: 20.02.2003 JP 2003043075
(71) Applicant: FANUC LTD, Minamitsuru-gun, Yamanashi 401-0597 (JP)
(72) Inventor: Okamoto, Takashi, Minamitsuru-gun Yamanashi 401-0511 (JP); Furuya, Tsuyoshi, Minamitsuru-gun Yamanashi 401-0301 (JP); Yamaguchi, Akira, Minamitsuru-gun Yamanashi 401-0511 (JP)
(74) Representative: Billington, Lawrence Emlyn

(57) **Abstract**

An electric motor capable of easily obtaining a required output characteristic. Two separated windings are provided for each of phases U, V, W. Connector units A-I for connecting the windings, and amplifier connection terminals AT1, AT2 are provided. By selectively setting connection states of the connector units A-I, an electric motor having stator windings in a star connection in series or parallel, or an electric motor having stator windings in a delta connection in series or parallel is obtained. By connecting amplifiers to the amplifier connection terminals AT1, AT2 separately, and selecting the connection states of the connector units A-I, an electric motor having an output characteristic equivalent to two electric motors can be obtained. Depending on a machine to which an electric motor is to be applied, an electric motor having an optimum output characteristic can be obtained only by selecting the connection states of the connector units.

## Description

### BACKGROUND OF THE INVENTION

### 1. Field of the Invention

The invention relates to an electric motor, and more specifically to an electric motor capable of easily obtaining a desired output characteristic.

### 2. Description of Related Art

An output characteristic of an electric motor varies depending on the number of windings for each phase, and whether the windings are formed in a delta connection or a star connection. Thus, there is known a method of switching winding connection of an electric motor to have a plurality of output characteristics.

For example, there is known a winding connection switching method for a three-phase induction motor where dividing points are provided for windings for each phase so that the manner of connection of the windings can be changed using the dividing points to form a delta connection or a star connection (see JP 6-296350A).

While the output characteristic of an electric motor can be varied by changing the connection of the windings as mentioned above, there is limitation in expanding a range of the output characteristic only by changing the connection of the windings in this conventional manner. Thus, in order to obtain a desired output characteristic, it is necessary to prepare another electric motor or prepare another amplifier having different capacity. The preparation of another electric motor or amplifier increases manufacturing cost correspondingly.

### SUMMARY OF THE INVENTION

The present invention provides an electric motor capable of easily obtaining a required output characteristic.

According to an aspect of the present invention, an electric motor comprises at least two separated windings for each phase of stator-winding, each of the separated windings having opposite ends serving as terminals to be selectively connected with one another and selectively connected with at least one power supply so that different output characteristics are obtained.

According to another aspect of the present invention, an electric motor comprises: at least two separated windings for each phase of stator-winding, each of the separated windings having opposite ends; and a terminal block having terminals connected with the opposite ends of the separated windings, said terminals being selectively connected with one another and selectively connected with at least one power supply so that different output characteristics are obtained.

According to still another aspect of the present invention, an electric motor comprises: at least two separated windings for each phase of stator-winding; connector units for selectively connecting the separated windings to form a star connection or a delta connection; and power-supply connection terminals for supplying electric power from at least one power supply to the separated windings.

In this case, the connector units may include a connector unit for connecting the separated windings for each phase to form a series connection, a parallel connection or a combination thereof, and a connector unit for connecting the separated windings to form a star connection or a delta connection. The power-supply connection terminals may be provided to be connected to power supplies of the number same as the number of separated windings in each phase. The connecting units may have selector switches for selectively connecting the separated windings, and the selector switches may comprise automatically operating selector switches.

### BRIEF DESCRIPTION OF THE DRAWINGS

FIG. 1 is a diagram showing a wire connection structure of an electric motor according to an embodiment of the invention;
FIG. 2 is a diagram showing details of a connector unit in the embodiment;
FIG. 3 is a table showing the connection states of connector units in each of connection manners in the embodiment;
FIGS. 4a-4f are illustrations showing how wires are connected in an electric motor in each of the connection manners in the embodiment;
FIG. 5 is a diagram showing an output characteristic in each of the connection manners in the embodiment; and
FIG. 6 a diagram showing an output characteristic in each of the connection manners in the embodiment, in the case where an amplifier supplying twice as high voltage is used.

### DETAILED DESCRIPTION

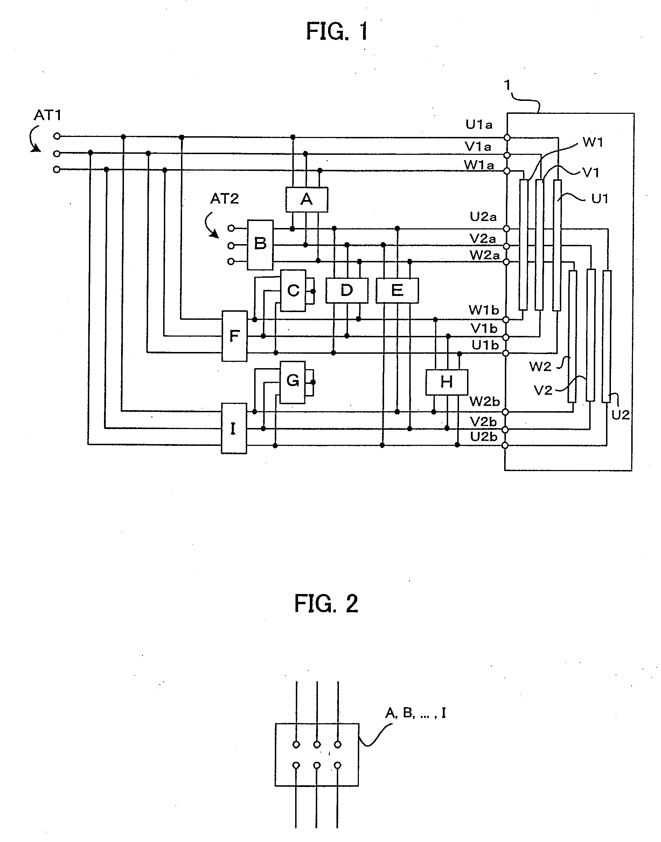

FIG. 1 is a diagram showing a wire connection structure of an electric motor according to an embodiment of the invention. In the electric motor according to this embodiment, a motor body 1 has two separated stator windings for each phase, namely stator windings U1, U2 for a phase U, stator windings V1, V2 for a phase V, and stator windings W1, W2 for a phase W. The opposite ends of the winding U1 are indicated by reference signs U1a, U1b, the opposite ends of the winding U2 by U2a, U2b, the opposite ends of the winding V1 by V1a, V1b, the opposite ends of the winding V2 by V2a, V2b, the opposite ends of the winding W1 by W1a, W1b, and the opposite ends of the winding W2 by W2a, W2b. The ends U1a, V1a, W1a of the windings U1, V1, W1 form a group, the ends U1b, V1b, W1b thereof form a group, the ends U2a, V2a, W2a of the windings U2, V2, W2 form a group, and the ends U2b, V2b, W2b thereof form a group.

An amplifier connection terminal AT1 for connecting an amplifier as a power supply part is connected to the ends U1a, V1a, W1a. A connector unit A is connected to the ends U1a, V1a, W1a and the ends U2a, V2a, W2a. A connector unit B is connected to the ends U2a, V2a, W2a, and an amplifier connection terminal AT2 is connected to the opposite side of the connector unit B. A connector unit C is connected to the ends U1b, V1b, W1b, and terminals on the opposite side of the connector unit C are connected to the same connection point.

A connector unit D is connected to the ends U2a, V2a, W2a and the ends U1b, V1b, W1b, a connector unit E is connected to the ends U2a, V2a, W2a and the ends U2b, V2b, W2b, a connector unit F is connected to the ends U1a, V1a, W1a and the ends U1b, V1b, W1b, and a connector unit G is connected to the ends U2b, V2b, W2b. Terminals on the opposite side of the connector unit G are connected to the same connection point. A connector unit H is connected to the ends U1b, V1b, W1b and the ends U2b, V2b, W2b, and a connector unit I is connected to the ends U2b, V2b, W2b and the ends U1a, V1a, W1a.

As shown in FIG. 2, each of the connector units A to I has three pairs of connection terminals, where the paired terminals face each other and can be connected with each other. The paired terminals may be connected with each other in a semi-fixed manner, for example by soldering a conductive wire to the paired terminals. Alternatively, the paired terminals may be connected with each other by providing a switch or the like between.

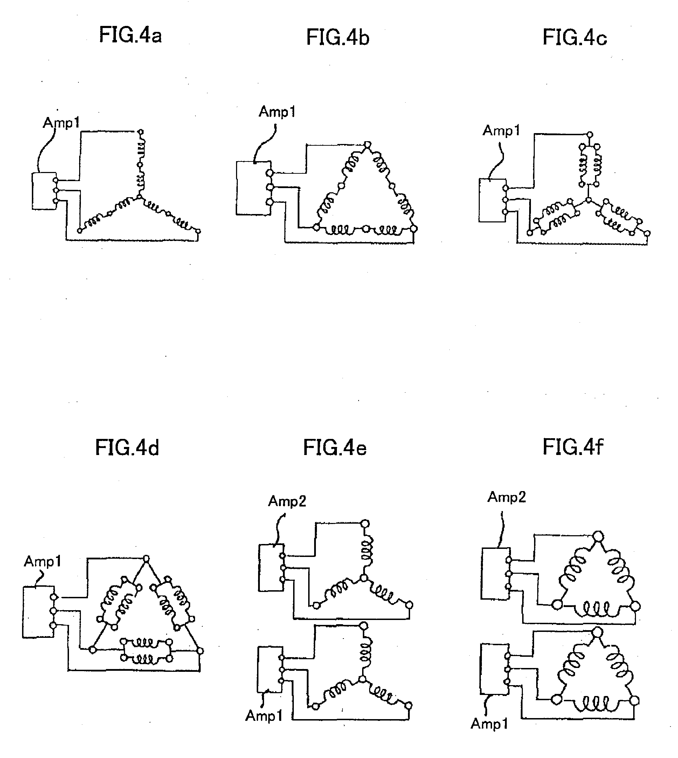

When a connection manner in which an amplifier Amp1 is connected to the amplifier connection terminal AT1 and the connector units D, G are each in a connected state (that is, the paired terminals are connected with each other in the connector units D, G) is taken, an electric motor having a star connection in which the windings for each phase are connected in series as shown in FIG 4a is formed. Specifically, since the connector unit D is in the connected state and the ends U2b, V2b, W2b are connected to the same connection point by the connector unit G, the end U2b connected to the shared connection point is connected through the U-phase winding U2, the end U2a, the connector unit D, the end U1b, the U-phase winding U1 and the end U1a to the amplifier Amp1, the end V2b connected to the shared connection point is connected through the V-phase winding V2, the end V2a, the connector unit D, the end V1b, the V-phase winding V1 and the end V1a to the amplifier Amp1, and the end W2b connected to the shared connection point is connected through the W-phase winding W2, the end W2a, the connector unit D, the end W1b, the W-phase winding W1 and the end W1a to the amplifier Amp1. As a result, an electric motor is formed in the connection manner shown in FIG. 4a forming a star connection in which the windings for each phase are connected in series.

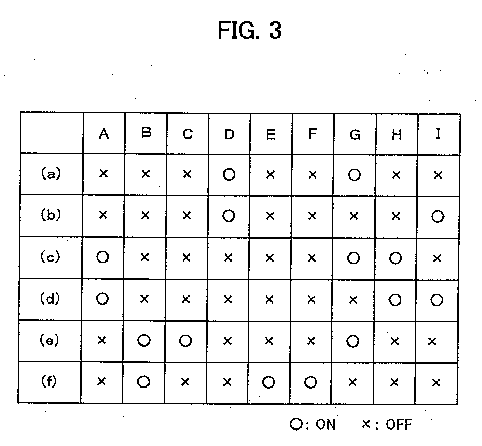

FIG. 3 is a table showing the connection states of the connector units A to I in each of the connection manners for forming electric motors having wire connections shown in FIGS. 4a-4f. In the table, a circle (○) means that the connector unit in question is in an on-state, or in a connected state where the paired terminals in the connector unit are connected with each other, while a cross (×) means that the connector unit in question is in an off-state, or in a disconnected state where the paired terminals in the connector unit are not connected with each other. As shown in FIG. 3, when the connector units D and G are in the on-state (connected state) and an amplifier is connected to the amplifier connection terminal AT1, the electric motor is formed in the connection manner shown in FIG. 4a forming a star connection in which the windings for each phase are formed in series.

When the connector units D and I are in the on-state (connected state) and the amplifier Amp1 is connected to the amplifier terminal AT1, an electric motor is formed in the connection manner shown in FIG. 4b forming a delta connection in which the windings for each phase are connected in series. Specifically, the U-phase terminal of the amplifier terminal AT1 is connected through the end U1a, the U-phase winding U1, the end U1b, the connector unit D, the end U2a, the U-phase winding U2, the end U2b and the connector unit I to the V-phase terminal of the amplifier terminal AT1 and also to the end V1a; the end V1a is connected through the V-phase winding V1, the end V1b, the connector unit D, the end V2a, the V-phase winding V2, the end V2b and the connector unit I to the W-phase terminal of the amplifier terminal AT1 and also to the end W1a; and the end W1a is connected through the W-phase winding W1, the end W1b, the connector unit D, the end W2a, the W-phase winding W2, the end W2b and the connector unit I to the U-phase terminal of the amplifier terminal AT1. As a result, an electric motor is formed in the connection manner shown in FIG. 4b forming a delta connection.

Likewise, as shown in FIG. 3, when the connector units A, G and H are in the on-state (connected state) and the amplifier Amp1 is connected to the amplifier terminal AT1, an electric motor is formed in the connection manner shown in FIG. 4c forming a star connection in which the windings for each phase are connected in parallel. When the connector units A, H and I are in the on-state (connected state) and the amplifier Amp1 is connected to the amplifier terminal AT1, an electric motor is formed in the connection manner shown in FIG. 4d forming a delta connection in which the windings for each phase are connected in parallel.

When the connector units B, C and G are in the on-state (connected state) and the amplifiers Amp1 and Amp2 of the current supply part are connected to the amplifier terminals AT1 and AT2 respectively, an electric motor is formed in the connection manner which forms two star connections independently as shown in FIG. 4e (in this case, substantially two motors are formed). When the connector units B, E and F are in the on-state (connected state) and the amplifiers Amp l and Amp2 are connected to the amplifier terminals AT1 and AT2 respectively, an electric motor is formed in the connection manner which forms two delta connections independently as shown in FIG. 4f (also in this case, substantially two motors are formed).

While the above-described embodiment has the connector units A to I and the amplifier terminals AT1 and AT2, it may be so arranged that, instead of the connector units A to I and the amplifier terminals AT1 and AT2, a terminal block is provided for the motor body 1 and that the opposite ends of each of the separated windings for each phase are connected to terminals provided at the terminal block. In this case, the connection terminals provided at the terminal block to be connected to the windings are separated into a group consisting of connection terminals corresponding to the ends U1a, V1a, W1a, a group consisting of connection terminals corresponding to the ends U1b, V1b, W1b, a group consisting of connection terminals corresponding to the ends U2a, V2a, W2a, and a group consisting of connection terminals corresponding to the ends U2b, V2b, W2b as in the case of FIG. 1, and arranged according to the groups.

In this case, the windings can be connected with one another in a manner similar to the above-described case in which the windings are connected using the connector units A to I. Specifically, the windings can be connected with one another by connecting the terminals provided at the terminal block with one another using copper wires or the like, and connecting the amplifier Amp1 and, as necessary, also the amplifier Amp2 to the terminals.

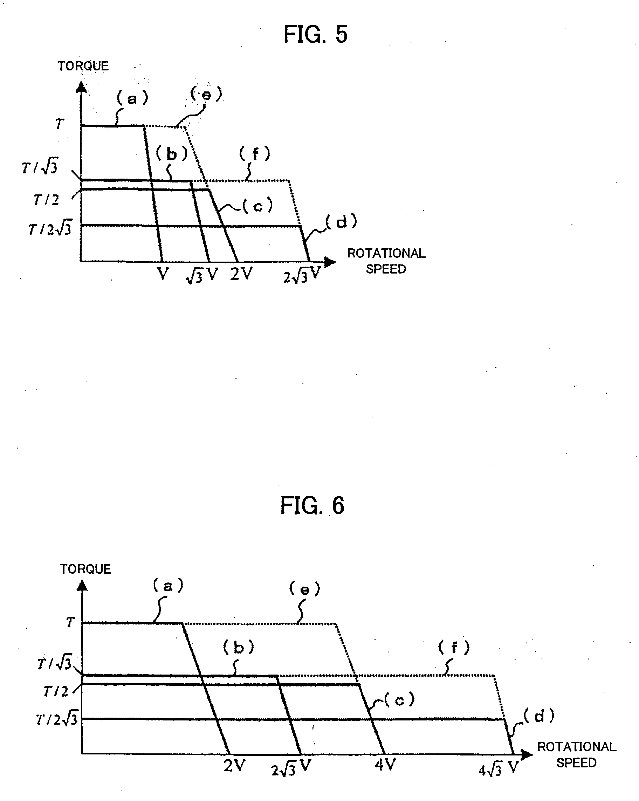

As described above, in the present embodiment, six types of electric motors can be formed by changing the manner of wire connection. The output characteristics of those six types are shown in FIG. 5. Reference signs (a) to (f) indicating the individual output characteristics in FIG. 5 correspond to six types of electric motors which are different in wire connection manner, as shown in FIGS. 4a-4f. As shown in FIG. 5, the six types of electric motors have different output characteristics. Hence, only by selectively setting the connection states of the connector units, an electric motor having an optimum output characteristic can be formed according to the torque and/or speed required for a machine or the like to which the electric motor is applied.

For example, when an electric motor is applied to a press machine and large punching force is required, the electric motor should be so formed as to have a star connection shown in FIG. 4a in which the windings for each phase are connected in series. In that case, the electric motor has a high-torque characteristic. If, in addition, the speed needs to be increased, the electric motor should be so formed as to have two star connections as shown in FIG. 4e. In that case, the electric motor has high torque and a wide range of speed. When the punching force does not need to be large and the rate of hitting needs to be increased, the electric motor should be so formed as to have a delta connection shown in FIG. 4d in which the windings for each phase are connected in parallel, or to have two delta connections as shown in FIG. 4f. In these cases, the electric motor has a wide range of speed.

Since the six types of electric motors as shown in FIGS. 4a-4f can be formed by selectively setting the connection states of the connector units A to I and the output characteristics of these six types of electric motors are different as shown in FIG. 5, when an electric motor should be applied to a machine, it is possible to form the electric motor to have an optimum output characteristic and apply the electric motor thus formed to the machine. It is to be noted that in that case, only a single type of motor body 1 is required (in the present embodiment, the electric motor having two separated windings for each phase and the connector units A to I). In other words, it is not necessary to produce separate types of electric motors according to required different output characteristics. Hence, the production cost of the electric motor can be decreased through mass production of a single type of electric motor.

Even when a single amplifier is used, four types of electric motors having different output characteristics can be formed as shown in FIGS. 4a-4d and by (a) to (d) in FIG. 5. Thus, even when only a single type of amplifier is prepared, satisfactory results are obtained. This also improves the production efficiency. Further, by using an amplifier which is different in supply voltage, the range of the output characteristic can be changed. FIG. 6 shows the output characteristics of the electric motors formed according to the different connection manners (FIGS. 4a to 4f), in the case where an amplifier which is the same in current capacity and twice as high in supply voltage is used. As obvious from comparison between FIGS. 6 and 5, by making the supply voltage twice as high, the maximum speed can be raised to be twice as high in any of the connection manners.

Hence, by using an amplifier which is the same in current capacity and different in supply voltage, almost the same output characteristic can be obtained even when the wire connection manner is different. For example, in a case where an electric motor should be applied to a machine of which a version for use in Japan (referred to as Japanese version) is designed for use with 200V, while a version for use in Europe (referred to as European version) is designed for use with 400V, if the connection manner (e) is selected for the Japanese version designed for use with 200V, the equivalent output characteristic can be obtained in the European version designed for use with 400V by forming an electric motor in the connection manner (a) (see (a) in FIG. 6). In this case, the resulting output characteristic almost corresponds to the output characteristic of the electric motor which takes the connection manner (e) and is supplied with 200V (see (e) in FIG. 5). Hence, it is not necessary to prepare different electric motors for the Japanese version (designed for use with 200V) and the European version (designed for use with 400V), separately. Only by changing the connection states of the connector units, a single type of motor body can be applied to both the Japanese version and the European version. Thus, the versatility of the electric motor is further expanded.

While in the above-described embodiment, the connector units A to I are connected in a semi-fixed manner, it may be so arranged that the connector units each comprise a switch so that any of the connection manners (FIG. 4a to FIG. 4f) can be selected by changing the positions of the switches. It is also possible to provide those switches as automatically operating selector switches such as electromagnetic contactors, so that the connection manner can be changed by the electromagnetic contactors' changing the connection states of the connector units depending on whether the operation of a machine to which the electric motor is applied requires speed or torque. In this case, the required output characteristic of the electric motor can be obtained according to the operation of the machine which varies from time to time.

Only by changing the number of amplifiers to be connected to a single motor body and/or changing the manner of wire connection, a plurality of types of electric motors having different output characteristics can be formed. Thus, it is not necessary to produce separate types of electric motors according to required output characteristics. By producing only a single type of motor body and selecting the number of amplifiers and the manner of wire connection, an output characteristic required for a machine to which the motor body is attached can be obtained. This allows mass production of the motor body and reduces the production cost of the motor body.

## Claims

1. An electric motor comprising:
at least two separated windings for each phase of stator-winding, each of said separated windings having opposite ends serving as terminals to be selectively connected with one another and selectively connected with at least one power supply so that different output characteristics are obtained.

2. An electric motor comprising:
at least two separated windings for each phase of stator-winding, each of said separated windings having opposite ends; and
a terminal block having terminals connected with the opposite ends of said separated windings, said terminals being selectively connected with one another and selectively connected with at least one power supply so that different output characteristics are obtained.

3. An electric motor comprising:
at least two separated windings for each phase of stator-winding;
connector units for selectively connecting said separated windings to form a star connection or a delta connection; and
power-supply connection terminals for supplying electric power from at least one power supply to said separated windings.

4. An electric motor according to claim 3, wherein said connector units include a connector unit for connecting said separated windings for each phase to form a series connection, a parallel connection or a combination thereof, and a connector unit for connecting said separated windings to form a star connection or a delta connection.

5. An electric motor according to claim 3, wherein said power-supply connection terminals are provided to be connected to power supplies of the number same as the number of separated windings in each phase.

6. An electric motor according to any of claims 3, wherein said connecting units have selector switches for selectively connecting said separated windings.

7. An electric motor according to claim 6, wherein said selector switches comprise automatically operating selector switches.
